# EUROPÄISCHE PATENTSCHRIFT

(11) **EP 0 764 491 B1**
(45) Veröffentlichungstag und Bekanntmachung des Hinweises auf die Patenterteilung: **06.12.2000**
(21) Anmeldenummer: 96114062.1
(22) Anmeldetag: 03.09.1996
(51) Int. Cl.: B23D 1/26

(54) **Werkzeug zum Bearbeiten von Werkstücken**
Tool for machining works
Outil pour l'usinage de pièces

(30) Priorität: 19.09.1995 DE 29514965 U
(43) Veröffentlichungstag der Anmeldung: 26.03.1997
(73) Patentinhaber: Trumpf GmbH & Co, D-71254 Ditzingen (DE)
(72) Erfinder: Meiler, Ruedi, 7220 Schiers (CH); Accola, Mathias, 7302 Landquart (CH)
(74) Vertreter: KOHLER SCHMID + PARTNER

(56) Entgegenhaltungen:
- DE-A- 3 004 881
- DE-B- 1 172 515
- DE-B- 1 225 468

## Beschreibung

Die Erfindung betrifft ein Werkzeug zum Abschrägen von Rändern an Werkstücken, vorzugsweise an Blechen, wobei das Werkzeug in Vorschubrichtung längs des zu bearbeitenden Werkstückrandes sowie in Beaufschlagungsrichtung quer zu der Vorschubrichtung relativ zu dem Werkstück bewegbar ist und wenigstens zwei in Vorschubrichtung verlaufende und in dieser Richtung nebeneinander angeordnete Schneiden aufweist.

Derartige Werkzeuge werden beispielsweise eingesetzt, um Bleche zur Vorbereitung auf einen späteren Schweißvorgang zu bearbeiten. Der Rand des betreffenden Blechs wird zu diesem Zweck abgeschrägt. Die sich dabei ergebende Schrägfläche begrenzt die später zur Herstellung einer Schweißverbindung genutzte Schweißfuge.

Bekanntermaßen ist an gattungsgemäßen Werkzeugen die bei der Werkstückbearbeitung in Vorschubrichtung vordere Schneide gegenüber der nacheilenden Schneide in Beaufschlagungsrichtung zurückgesetzt angeordnet. Die voreilende Schneide dient dazu, die an dem Werkstückrand zu erstellende Schrägfläche teilweise zu schneiden. Beim Anschneiden des Blechrandes wird das Werkzeug mit seiner in Vorschubrichtung voreilenden Schneide an dem Blechrand entlang verschoben, bis die zu erstellende Schrägfläche teilweise geschnitten ist. Anschließend wird das Werkzeug entgegen der Beaufschlagungsrichtung zurückbewegt und in Vorschubrichtung relativ zu dem Blech derart verschoben, daß es mit der nacheilenden Schneide bei der nächsten Bewegung in Beaufschlagungsrichtung den von der voreilenden Schneide stehengelassenen und zur Erstellung der Schrägfläche noch zu entfernenden Randteil abträgt und dadurch die Schrägfläche vollständig herstellt. Mit dem Entfernen des in Beaufschlagungsrichtung vor der nacheilenden Schneide anstehenden Restes des Werkstückrandes verbunden ist ein teilweises Freischneiden der Schrägfläche in dem der nacheilenden Schneide in Vorschubrichtung benachbarten Werkstückbereich durch die voreilende Schneide. Falls die sich ergebende Schrägfläche verhältnismäßig rauh ist, wird in einem zweiten Arbeitsgang zum Glätten der Schrägfläche von dem durch "Schruppen" abgeschrägten Werkstückrand nach vorheriger Veränderung der Relativlage von Werkzeug und Werkstück über die gesamte Schrägfläche im Wege des "Schlichtens" ein relativ dünner Span abgenommen.

Der Erfindung liegt nun die Aufgabe zugrunde, ein Werkzeug zur Verfügung zu stellen, mittels dessen sich die Herstellung von die gewünschte Oberflächenbeschaffenheit besitzenden Flächen an Werkstückrändern vereinfacht.

Diese Aufgabe wird erfindungsgemäß dadurch gelöst, daß an einem Werkzeug der eingangs genannten Art wenigstens eine in Vorschubrichtung hintere Schneide gegenüber wenigstens einer in Vorschubrichtung vorderen Schneide senkrecht zu der durch die Beaufschlagungsrichtung und die Vorschubrichtung definierten Ebene zu dem Werkstück hin versetzt angeordnet ist. Die jeweils vordere Schneide wird dazu verwendet, die zu erstellende Fläche im Laufe der Bewegung des Werkzeugs in Beaufschlagungsrichtung teilweise oder vollständig zu schneiden. Nach dem Rückhub des Werkzeugs und dem anschließenden Verschieben des Werkzeugs relativ zu dem Werkstück in Vorschubrichtung wird die vordere Schneide an dem der zuvor geschnittenen Fläche benachbarten Teil des Werkstückrandes angesetzt. Damit zeitgleich kommt die nacheilende Schneide im Bereich der zuvor mittels der voreilenden Schneide erstellten Schrägfläche zu liegen. Wird nun das Werkzeug in Beaufschlagungsrichtung verfahren, so räumt die vordere Schneide einen neuen Flächenabschnitt vollständig oder teilweise, und die hintere Schneide hebt gleichzeitig von der mittels der vorderen Schneide zuvor erstellten Fläche einen Span ab, dessen Dicke in etwa dem Betrag des Versatzes der einander benachbarten Schneiden senkrecht zu der durch die Beaufschlagungsrichtung und die Vorschubrichtung definierten Ebene entspricht. Zeitlich parallel mit dem "Schruppen" durch die vordere Schneide erfolgt das "Schlichten" mittels der hinteren Schneide, wobei das Werkzeug mit einer Hubzahl von beispielsweise 500 Hüben pro Minute in Beaufschlagungsrichtung arbeitet. Auf die beschriebene Art und Weise lassen sich die zu schneidenden Flächen an Werkstückrändern, beispielsweise Schrägflächen an Blechrändern, in einem Arbeitsgang mit der gewünschten Oberflächenbeschaffenheit herstellen.

Hinsichtlich der Oberflächenbeschaffenheit der erstellten Flächen günstige Bearbeitungsergeonisse lassen sich mittels einer Ausführungsform des erfindungsgemäßen Werkzeugs erzielen, im Falle derer wenigstens zwei Schneiden in Beaufschlagungsrichtung gegeneinander versetzt angeordnet sind, wobei vorzugsweise wenigstens eine vordere Schneide in Beaufschlagungsrichtung gegenüber wenigstens einer hinteren Schneide versetzt angeordnet ist.

Eine ebenfalls positive Auswirkung auf das Bearbeitungsergebnis hat es, wenn, wie in Weiterbildung der Erfindung vorgesehen, wenigstens eine der Schneiden im wesentlichen senkrecht zu der Beaufschlagungsrichtung verläuft und/oder wenigstens eine der Schneiden mit der Beaufschlagungsrichtung einen spitzen Winkel, vorzugsweise einen Winkel von wenigstens 60° einschließt.

An erfindungsgemäßen Werkzeugen läßt sich grundsätzlich eine nahezu beliebige Anzahl von senkrecht zu der durch die Beaufschlagungsrichtung und die Vorschubrichtung definierten Ebene zu dem Werkstück hin gegeneinander versetzt angeordneten Schneiden verwenden. Im Falle einer zweckmäßigen Ausführungsform der Erfindung sind drei Schneiden vorgesehen, wobei die in Vorschubrichtung jeweils hintere Schneide gegenüber der benachbarten in Vorschubrichtung jeweils vorderen Schneide senkrecht zu der durch die Beaufschlagungsrichtung und die Vorschubrichtung definierten Ebene zu dem Werkstück hin versetzt angeordnet ist. Mittels eines derartigen Werkzeugs läßt sich der am Werkstückrand zu entfernende Werkstückbereich in drei Schichten abheben. Beim Abschrägen von Blechrändern mit im wesentlichen senkrecht zueinander verlaufenden Kanten räumt die in Vorschubrichtung voreilende Schneide einen als senkrechtes Prisma ausgebildeten Werkstückbereich mit einer Grundfläche in Form eines rechtwinkligen Dreiecks. Von der sich dabei ergebenden Schrägfläche heben die der zunächst im Eingriff befindlichen Schneide entgegen der Vorschubrichtung benachbarten Schneiden nacheinander jeweils einen Span ab.

Um mit ein und demselben Werkzeug Werkstücke in zwei einander entgegengesetzten Vorschubrichtungen bearbeiten zu können, sind in bevorzugter Ausgestaltung der Erfindung drei Schneiden vorgesehen, wobei die in Vorschubrichtung mittlere Schneide gegenüber den beidseits benachbarten Schneiden senkrecht zu der durch die Beaufschlagungsrichtung und die Vorschubrichtung definierten Ebene zu dem Werkstück hin versetzt angeordnet ist.

Zweckmäßigerweise ist an erfindungsgemäßen Werkzeugen mit drei Schneiden die in Vorschubrichtung mittlere Schneide gegenüber den beidseits benachbarten Schneiden in Beaufschlagungsrichtung versetzt angeordnet.

Eine weitere bevorzugte Aufsführungsform eines erfindungsgemäßen Werkzeugs mit drei Schneiden zeichnet sich dadurch aus, daß die in Vorschubrichtung mittlere Schneide im wesentlichen senkrecht zu der Beaufschlagungsrichtung verläuft und die der mittleren Schneide beidseits benachbarten Schneiden mit der Beaufschlagungsrichtung jeweils einen spitzen Winkel, vorzugsweise einen Winkel von wenigstens 60° einschließen.

Ein in zwei einander entgegengesetzten Vorschubrichtungen gleichartiges Bearbeitungsergebnis läßt sich in vorteilhafter Ausgestaltung des erfindungsgemäßen Werkzeugs dadurch erzielen, daß eine ungerade Anzahl von wenigstens drei Schneiden vorgesehen ist, wobei die in Vorschubrichtung mittlere Schneide gegenüber den übrigen Schneiden senkrecht zu der durch die Beaufschlagungsrichtung und die Vorschubrichtung definierten Ebene zu dem Werkstück hin versetzt angeordnet ist und die der mittleren Schneide benachbarten Schneiden bezogen auf eine in Beaufschlagungsrichtung sowie senkrecht zu der durch die Beaufschlagungsrichtung und die Vorschubrichtung definierten Ebene durch die mittlere Schneide verlaufende Symmetrieebene spiegelsymmetrisch angeordnet und ausgebildet sind.

Nachfolgend wird die Erfindung anhand schematischer Darstellungen zu Ausführungsbeispielen näher erläutert. Es zeigen:
- Fig. 1: eine Prinzipdarstellung zur Funktionsweise einer ersten Ausführungsform eines Stoßstahls,
- Fig. 2: den Stoßstahl gemäß Fig. 1 in der Ansicht von dem Werkstück her,
- Fig. 3: eine Prinzipdarstellung zur Funktionsweise einer zweiten Ausführungsform eines Stoßstahls,
- Fig. 4: eine Prinzipdarstellung zur Funktionsweise einer dritten Ausführungsform eines Stoßstahls,
- Fig. 5: den Stoßstahl gemäß Fig. 4 in der Ansicht von dem Werkstück her,
- Fign. 6 bis 9: eine vierte, fünfte, sechste und siebte Ausführungs- form eines Stoßstahls jeweils in der Ansicht von dem Werkstück her,
- Fig. 10: eine achte Ausführungsform eines Stoßstahls in Montagelage an einer Stoßstahlhalterung,
- Fig. 11: einen Schnitt entlang Linie I-I in Fig. 10 und
- Fig. 12: einen Schnitt entlang Linie II-II in Fig. 10.

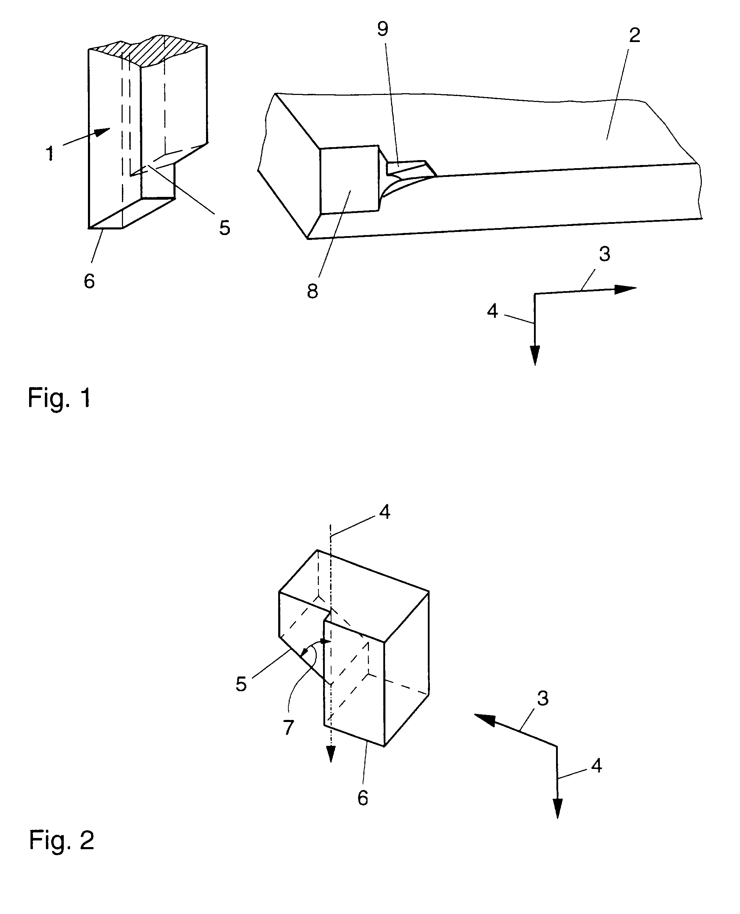

Gemäß Fig. 1 dient ein Stoßstahl 1 als Werkzeug zum Bearbeiten, nämlich zum Abschrägen des Randes eines Werkstücks in Form eines Blechs 2. Zu diesem Zweck ist der Stoßstahl 1 in der durch einen Pfeil 3 veranschaulichten Vorschubrichtung sowie in der durch einen Pfeil 4 repräsentierten Beaufschlagungsrichtung relativ zu dem Blech 2 bewegbar. Dabei erfolgt die Bewegung des Stoßstahls 1 in Vorschubrichtung 3, sobald sich der Stoßstahl 1 außer Eingriff mit dem Blech 2 befindet.

Wie aus den Fign. 1 und 2 hervorgeht, ist der Stoßstahl 1 an der dem Blech 2 bei der Bearbeitung zugewandten Seite mit zwei als Schneidkanten 5, 6 ausgebildeten Schneiden versehen. Dabei handelt es sich bei der Schneidkante 5 um die in Vorschubrichtung 3 vordere und bei der Schneidkante 6 um die in Vorschubrichtung 3 hintere Schneidkante. Senkrecht zu der durch die Beaufschlagungsrichtung 4 sowie die Vorschubrichtung 3 definierten Ebene ist die hintere Schneidkante 6 gegenüber der vorderen Schneidkante 5 zu dem Blech 2 hin versetzt angeordnet. Die vordere Schneidkante 5, welche mit der Beaufschlagungsrichtung 4 einen Winkel 7 von 60° einschließt, ist außerdem gegenüber der hinteren Schneide 6 in Beaufschlagungsrichtung 4 zurückgesetzt.

Bei der Bearbeitung des Blechs 2 wird der Stoßstahl 1 zunächst zur Herstellung eines Anschnitts mit der vorderen Schneide 5 im Bereich einer Ecke des Blechs 2 an letzterem angesetzt und in Beaufschlagungsrichtung 4 verschoben. Wie aus Fig. 1 ersichtlich, wird dabei mittels der vorderen Schneidkante 5 die betreffende Kante des Blechs 2 nicht vollständig gebrochen. Aufgrund einer entsprechenden Beschränkung des Hubes des Stoßstahls 1 in Beaufschlagungsrichtung 4 wird mittels der vorderen Schneidkante 5 vielmehr lediglich eine Kerbe in den Rand des Blechs 2 eingeschnitten. Die hintere Schneidkante 6 befindet sich bei der Herstellung des Anschnitts durch die vordere Schneidkante 5 außer Eingriff mit dem Blech 2.

Hat nun die vordere Schneidkante 5 ihre Endstellung in der Beaufschlagungsrichtung 4 erreicht, so wird der Stoßstahl 1 in seiner Bewegung umgekehrt und entgegen der Beaufschlagungsrichtung 4 so weit verfahren, bis die hintere Schneidkante 6 in Gegenrichtung der Beaufschlagungsrichtung 4 oberhalb des Blechs 2 angeordnet ist. Nun läßt sich der Stoßstahl 1 gegenüber dem Blech 2 in Vorschubrichtung 3 so weit verschieben, bis die hintere Schneidkante 6 der mittels der vorderen Schneidkante 5 zuvor eingeschnittenen Kerbe in etwa gegenüberliegend angeordnet ist. Beim nächsten Hub des Stoßstahls 1 in Beaufschlagungsrichtung 4 trifft die hintere Schneidkante 6 entlang einer Linie auf das Blech 2, die parallel zu derjenigen Linie verläuft, entlang welcher zuvor die vordere Schneidkante 5 auf das Blech 2 aufgetroffen ist und welche gegenüber der Auftrefflinie der vorderen Schneidkante 5 aufgrund des Versatzes von vorderer Schneidkante 5 und hinterer Schneidkante 6 senkrecht zu der durch die Beaufschlagungsrichtung 4 und die Vorschubrichtung 3 definierten Ebene zu dem Blech 2 hin versetzt angeordnet ist. Bei fortgesetztem Verfahren des Stoßstahls 1 in der Beaufschlagungsrichtung 4 hebt die hintere Schneidkante 6 zunächst einen hinter der mittels der vorderen Schneidkante 5 zuvor eingeschnittenen Kerbe anstehenden Blechspan ab, ehe sie in den von der vorderen Schneidkante 5 zuvor noch nicht bearbeiteten Kantenbereich an dem Blech 2 vordringt und einen abgeschrägten durchgehenden Flächenstreifen herstellt, dessen Breite in Vorschubrichtung der Erstreckung der hinteren Schneidkante 6 in dieser Richtung entspricht. Zeitgleich mit dem beschriebenen Schneiden des Schrägflächenstreifens durch die hintere Schneidkante 6 hat die der hinteren Schneidkante 6 in Vorschubrichtung 3 vorgesetzte vordere Schneidkante 5 eine dem Schrägflächenstreifen in Vorschubrichtung 3 benachbarte weitere Kerbe eingeschnitten. Der geschilderte Bearbeitungsvorgang wird so oft wiederholt, bis die betreffende Kante des Blechs 2 über die gewünschte Länge in Vorschubrichtung 3 abgeschrägt ist. Die sich dabei ergebende Schrägfläche, von der ein Schrägflächenabschnitt 8 benachbart zu einer mittels der vorderen Schneidkante 5 angeschnittenen Kerbe 9 in Fig. 1 dargestellt ist, besitzt eine glatte Oberfläche.

Zum Antrieb in der Beaufschlagungsrichtung 4 sowie zur Ausführung des Rückhubes in Gegenrichtung ist der Stoßstahl 1 über eine herkömmliche Werkstückhalterung mit einer gebräuchlichen Antriebseinheit verbunden. Diese Antriebseinheit ist ebenso wie der Stoßstahl 1 Bestandteil eines tragbaren Gerätes, wie es beispielsweise bekannt ist aus der DE-PS 12 25 468 sowie aus der DE-PS 30 04 881. Die Relativbewegung zwischen dem Stoßstahl 1 und dem Blech 2 in Vorschubrichtung 3 kann beispielsweise von Hand bewerkstelligt werden. Ebenso ist es möglich, zur Relativbewegung von Stoßstahl 1 und Blech 2 in Vorschubrichtung einen motorischen Antrieb einzusetzen.

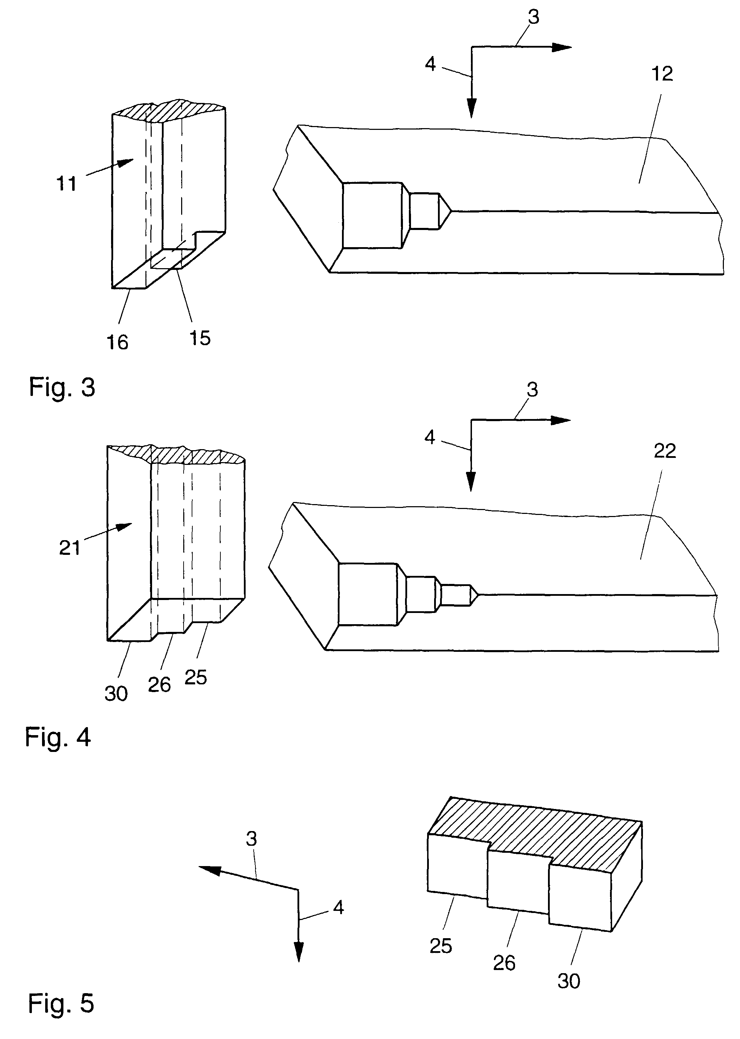

Die Funktionsweise eines in Fig. 3 gezeigten Werkzeugs in Form eines Stoßstahls 11 entspricht im wesentlichen der Funktionsweise des Stoßstahls 1 gemäß Fig. 1. An dem Stoßstahl 11 vorgesehen ist eine als Schneidkante 15 ausgebildete vordere sowie eine als Schneidkante 16 ausgebildete hintere Schneide. Die vordere Schneide 15 verläuft ebenso wie die hintere Schneidkante 16 in Vorschubrichtung 3. In der Beaufschlagungsrichtung 4 sind die Schneidkanten 15, 16 gegeneinander versetzt, wobei die hintere Schneidkante 16 der vorderen Schneidkante 15 in der Beaufschlagungsrichtung 3 voreilend angeordnet ist. An der einem Blech 12 zugewandten Seite des Stoßstahls 11 ist die hintere Schneidkante 16 gegenüber der vorderen Schneidkante 15 senkrecht zu der durch die Beaufschlagungsrichtung 3 und die Vorschubrichtung 4 definierten Ebene zu dem Blech 12 hin versetzt. Beide Schneidkanten 15, 16 verlaufen senkrecht zu der Beaufschlagungsrichtung 4.

Wie aus Fig. 3 hervorgeht, sind die Schneidkanten 15, 16 in der Beaufschlagungsrichtung 4 derart zueinander angeordnet und ist der Verfahrweg des Stoßstahls 11 in Beaufschlagungsrichtung 4 derart gewählt, daß die vordere Schneidkante 15 am Rand des Blechs 12 eine in der Beaufschlagungsrichtung 4 durchgehende Schrägfläche erstellt und die hintere Schneide 16 eine zu der mittels der vorderen Schneide 15 hergestellten Schrägfläche parallele Schrägfläche mit der gewünschten Oberflächenbeschaffenheit schneidet. Während die vordere Schneidkante 15 einen Werkstückbereich in Form eines senkrechten Prismas mit einer Grundfläche in Form eines rechtwinkligen Dreiecks entfernt, hebt die hintere Schneidkante 16 einen weniger als 1 mm dicken Blechspan ab.

Die Fign. 4 und 5 zeigen ein als Stoßstahl 21 ausgebildetes Werkzeug zur Bearbeitung des Randes an einem Werkstück in Form eines Blechs 22. Wie der Stoßstahl 1 gemäß den Fign. 1 und 2 sowie der Stoßstahl 11 gemäß Fig. 3 wird auch der Stoßstahl 21 zu Bearbeitungszwecken sowohl in Beaufschlagungsrichtung 4 als auch in Vorschubrichtung 3 relativ zu dem Blech 22 bewegt. Im Gegensatz zu den bereits beschriebenen Stoßstählen 1, 11 weist der Stoßstahl 21 drei Schneiden, nämlich eine in Vorschubrichtung 3 vordere Schneidkante 25 sowie dahinterliegende Schneidkanten 26 und 30 auf. Sämtliche Schneidkanten 25, 26, 30 verlaufen senkrecht zu der Beaufschlagungsrichtung 4. Senkrecht zu der durch die Beaufschlagungsrichtung 4 sowie die Vorschubrichtung 3 definierten Ebene ist die Schneidkante 30 gegenüber der Schneidkante 26 und sind die Schneidkante 26 und die Schneidkante 30 gegenüber der Schneidkante 25 zu dem Blech 22 hin versetzt angeordnet. Dementsprechend wird die betreffende Kante an dem Blech 22 mittels des Stoßstahls 21 in drei Schichten abgetragen. Mittels der Schneidkante 25 wird dabei ein Werkstückbereich in Form eines senkrechten Prismas mit einer Grundfläche in Form eines rechtwinkligen Dreiecks entfernt; mittels der Schneidkanten 26 und 30 werden jeweils dünne Blechspäne abgehoben. Die Schneidkante 30 erstellt die Schrägfläche mit der gewünschten Oberflächenbeschaffenheit.

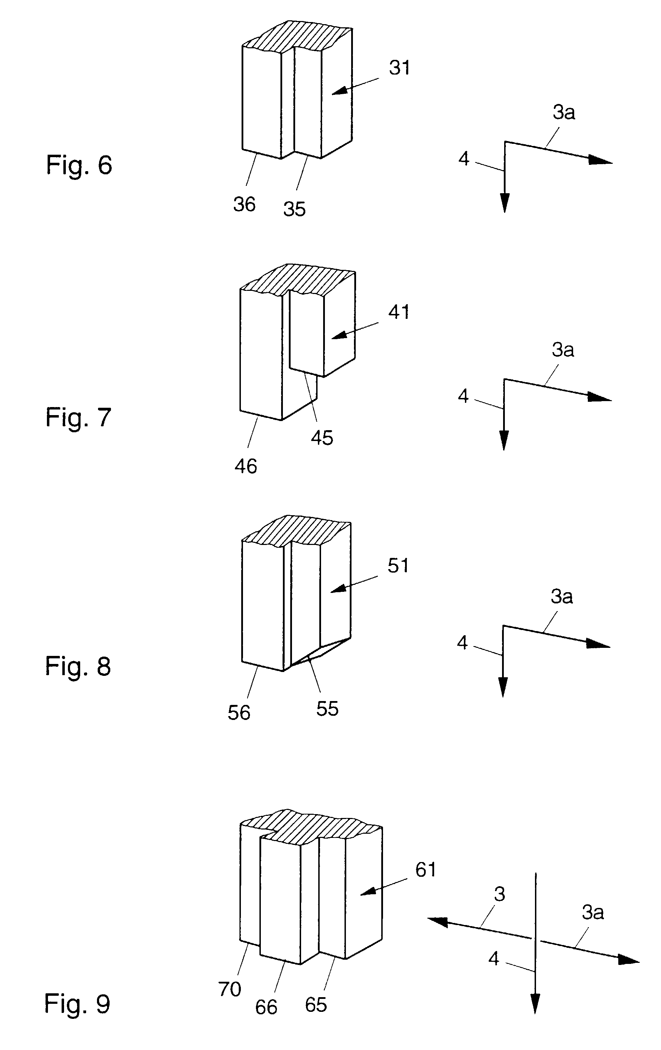

In den Fign. 6 bis 8 dargestellte Werkzeuge in Form von Stoßstählen 31, 41, 51 weisen jeweils eine als vordere Schneidkante 35, 45, 55 ausgebildete vordere Schneide sowie eine hintere Schneide in Form einer hinteren Schneidkante 36, 46, 56 auf. Die Stoßstähle 31, 41, 51 sind zum Betrieb in einer Vorschubrichtung 3a ausgebildet, die der Vorschubrichtung 3 gemäß den Fign. 1 bis 5 entgegengerichtet ist. Die vorderen Schneidkanten 35, 45 verlaufen senkrecht zu der Beaufschlagungsrichtung 4; die vordere Schneidkante 55 schließt mit der Beaufschlagungsrichtung 4 einen Winkel von etwa 60° ein. Die vordere Schneidkante 35 und die zugeordnete hintere Schneidkante 36 liegen in einer gemeinsamen Ebene senkrecht zu der Beaufschlagungsrichtung 4. Die vordere Schneidkante 45 ist gegenüber der an dem Stoßstahl 41 vorgesehenen hinteren Schneidkante 46 entgegen der Beaufschlagungsrichtung 4 versetzt angeordnet.

Fig. 9 zeigt ein als Stoßstahl 61 ausgebildetes Werkzeug, das relativ zu einem zu bearbeitenden Werkstück wahlweise in einer Vorschubrichtung 3 oder in einer dieser entgegengesetzten Vorschubrichtung 3a verschoben werden kann. Eine mittlere Schneide wird gebildet durch eine Schneidkante 66, die in Vorschubrichtung 3a als hintere Schneidkante einer vorderen Schneide in Form einer vorderen Schneidkante 65 nacheilt und die in der Vorschubrichtung 3 hinter einer dann voreilenden Schneide in Form einer vorderen Schneidkante 70 angeordnet ist. Die mittlere Schneidkante 66 ist gegenüber den beidseits benachbarten Schneidkanten 65, 70 senkrecht zu der durch die Beaufschlagungsrichtung 4 sowie die Vorschubrichtungen 3, 3a definierten Ebene zu dem zu bearbeitenden Werkstück hin versetzt angeordnet. Sämtliche Schneidkanten verlaufen in ein und derselben Ebene senkrecht zu der Beaufschlagungsrichtung 4.

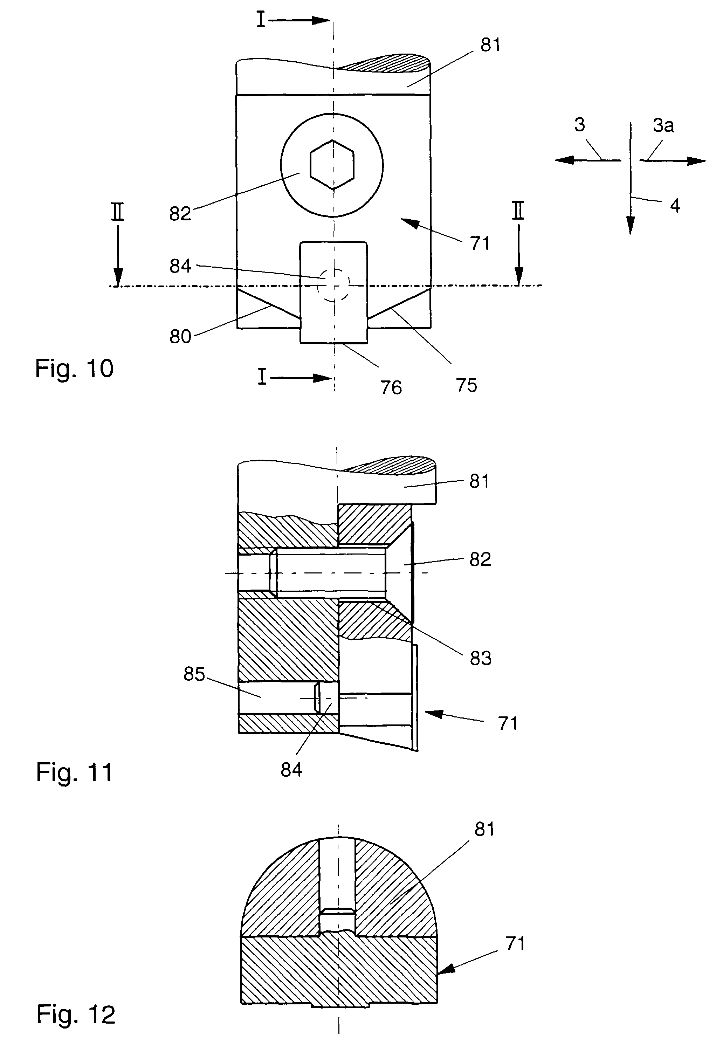

Gemäß den Fign. 10 bis 12 ist ein Werkzeug in Form eines Stoßstahls 71 an einer Werkzeughalterung 81 befestigt. Die Werkzeughalterung 81 ist an ihrem in den Fign. 10 und 11 oberen Ende als Rundstab ausgebildet und mit diesem Rundstabbereich an einem auf und ab bewegbaren Stößel einer herkömmlichen Antriebseinheit festlegbar.

Fig. 10 zeigt den Stoßstahl 71 in der Ansicht von dem zu bearbeitenden Werkstück her. Demnach besitzt der Stoßstahl 71 eine mittlere Schneide in Form einer mittleren Schneidkante 76 sowie dieser beidseits benachbarte Schneiden in Form von Schneidkanten 75 und 80. Der Stoßstahl 71 läßt sich ebenso wie der Stoßstahl 61 gemäß Fig. 9 in zwei einander entgegengesetzten Vorschubrichtungen 3, 3a betreiben. Die mittlere Schneidkante 76 ist gegenüber den beidseits benachbarten Schneidkanten 75, 80 senkrecht zu der durch die Beaufschlagungsrichtung 4 und die Vorschubrichtungen 3, 3a definierten Ebene zu dem zu bearbeitenden Werkstück hin versetzt angeordnet. Während die mittlere Schneidkante 76 senkrecht zu der Beaufschlagungsrichtung 4 verläuft, schließen die Schneidkanten 75, 80 mit dieser Richtung einen Winkel von etwa 60° ein. Insgesamt ergibt sich eine bezüglich der Ebene in Richtung der Schnittlinie I-I senkrecht zu der Zeichenebene von Fig. 10 spiegelsymmetrische Ausbildung des Stoßstahls 71. Zur Fixierung des flachen Stoßstahls 71 an der Werkzeughalterung 81 dient eine Senkkopfschraube 82, welche durch eine Bohrung 83 an dem Stoßstahl 71 in die Werkzeughalterung 81 eingedreht werden kann. Damit insbesondere bei der Werkstückbearbeitung ein Verschwenken des Stoßstahls 71 um die Längsachse der Senkkopfschraube 82 ausgeschlossen werden kann, weist der Stoßstahl 71 an der dem zu bearbeitenden Werkstück abgewandten Seite einen als Verdrehsicherung dienenden zylindrischen Zapfen 84 auf, der in Montagelage in eine entsprechende Zapfenaufnahme 85 der Werkstückhalterung 81 eingreift.

## Patentansprüche

1. Werkzeug zum Abschrägen von Rändern an Werkstücken (2, 12, 22), vorzugsweise an Blechen (2, 12, 22), wobei das Werkzeug (1, 11, 21, 31, 41, 51, 61, 71) in Vorschubrichtung (3, 3a) längs des zu bearbeitenden Werkstückrandes sowie in Beaufschlagungsrichtung (4) quer zu der Vorschubrichtung (3, 3a) relativ zu dem Werkstück (2, 12, 22) bewegbar ist und wenigstens zwei in Vorschubrichtung (3, 3a) verlaufende und in dieser Richtung nebeneinander angeordnete Schneiden (5, 6, 15, 16, 25, 26, 30, 35, 36, 45, 46, 55, 56, 65, 66, 70, 75, 76, 80) aufweist, dadurch gekennzeichnet, daß wenigstens eine in Vorschubrichtung (3, 3a) hintere Schneide (6, 16, 26, 30, 36, 46, 56, 66, 76) gegenüber wenigstens einer in Vorschubrichtung (3, 3a) vorderen Schneide (5, 15, 25, 26, 35, 45, 55, 65, 70, 75, 80) senkrecht zu der durch die Beaufschlagungsrichtung (4) und die Vorschubrichtung (3, 3a) definierten Ebene zu dem Werkstück (2, 12, 22) hin versetzt angeordnet ist.

2. Werkzeug nach Anspruch 1, dadurch gekennzeichnet, daß wenigstens zwei Schneiden (5, 6; 15, 16; 45, 46) in Beaufschlagungsrichtung (4) gegeneinander versetzt angeordnet sind.

3. Werkzeug nach Anspruch 1 oder 2, dadurch gekennzeichnet, daß wenigstens eine vordere Schneide in Beaufschlagungsrichtung (4) gegenüber wenigstens einer hinteren Schneide versetzt angeordnet ist.

4. Werkzeug nach einem der Ansprüche 1 bis 3, dadurch gekennzeichnet, daß wenigstens eine der Schneiden (25, 26, 30, 35, 36, 65, 66, 70) im wesentlichen senkrecht zu der Beaufschlagungsrichtung (4) verläuft.

5. Werkzeug nach einem der Ansprüche 1 bis 4, dadurch gekennzeichnet, daß wenigstens eine der Schneiden (5, 15, 55, 75, 80) mit der Beaufschlagungsrichtung (4) einen spitzen Winkel, vorzugsweise einen Winkel (7) von wenigstens 60° einschließt.

6. Werkzeug nach einem der Ansprüche 1 bis 5, dadurch gekennzeichnet, daß drei Schneiden (25, 26, 30) vorgesehen sind, wobei die in Vorschubrichtung (3) jeweils hintere Schneide (26, 30) gegenüber der benachbarten in Vorschubrichtung (3) jeweils vorderen Schneide (25, 26) senkrecht zu der durch die Beaufschlagungsrichtung (4) und die Vorschubrichtung (3) definierten Ebene zu dem Werkstück (2, 12, 22) hin versetzt angeordnet ist.

7. Werkzeug nach einem der Ansprüche 1 bis 6, dadurch gekennzeichnet, daß drei Schneiden (65, 66, 70; 75, 76, 80) vorgesehen sind, wobei die in Vorschubrichtung (3, 3a) mittlere Schneide (66, 76) gegenüber den beidseits benachbarten Schneiden (65, 70; 75, 80) senkrecht zu der durch die Beaufschlagungsrichtung (4) und die Vorschubrichtung (3, 3a) definierten Ebene zu dem Werkstück (2, 12, 22) hin versetzt angeordnet ist.

8. Werkzeug nach einem der Ansprüche 1 bis 7, dadurch gekennzeichnet, daß drei Schneiden (75, 76, 80) vorgesehen sind, wobei die in Vorschubrichtung (3) mittlere Schneide (76) gegenüber den beidseits benachbarten Schneiden (75, 80) in Beaufschlagungsrichtung (4) versetzt angeordnet ist.

9. Werkzeug nach einem der Ansprüche 1 bis 8, dadurch gekennzeichnet, daß drei Schneiden (75, 76, 80) vorgesehen sind, wobei die in Vorschubrichtung (3, 3a) mittlere Schneide (76) im wesentlichen senkrecht zu der Beaufschlagungsrichtung (4) verläuft und die der mittleren Schneide (76) beidseits benachbarten Schneiden (75, 80) mit der Beaufschlagungsrichtung (4) jeweils einen spitzen Winkel, vorzugsweise einen Winkel von wenigstens 60° einschließen.

10. Werkzeug nach einem der Ansprüche 1 bis 9, dadurch gekennzeichnet, daß eine ungerade Anzahl von wenigstens drei Schneiden (65, 66, 70; 75, 76, 80) vorgesehen ist, wobei die in Vorschubrichtung (3, 3a) mittlere Schneide (66, 76) gegenüber den übrigen Schneiden (65, 70; 75, 80) senkrecht zu der durch die Beaufschlagungsrichtung (4) und die Vorschubrichtung (3, 3a) definierten Ebene zu dem Werkstück (2, 12, 22) hin versetzt angeordnet ist und die der mittleren Schneide (66, 76) benachbarten Schneiden (65, 70; 75, 80) bezogen auf eine in Beaufschlagungsrichtung (4) sowie senkrecht zu der durch die Beaufschlagungsrichtung (4) und die Vorschubrichtung (3, 3a) definierten Ebene durch die mittlere Schneide (66, 76) verlaufende Symmetrieebene spiegelsymmetrisch angeordnet und ausgebildet sind.

## Claims

1. A tool for chamfering edges of workpieces (2, 12, 22), preferably of metal sheets (2, 12, 22), the tool (1, 11, 21, 31, 41, 51, 61, 71) being movable relative to the workpiece (2, 12, 22), along the edge of the workpiece to be machined, in the direction of advance (3, 3a) and at right angles to the direction of advance (3, 3a) in the direction of impingement (4) and having at least two cutters (5, 6, 15, 16, 25, 26, 30, 35, 36, 45, 46, 55, 56, 65, 66, 70, 75, 76, 80) extending in the direction of advance (3, 3a) and arranged side by side in that direction, characterised in that at least one cutter (6, 16, 26, 30, 36, 46, 56, 66, 76) that is a rearward cutter in the direction of advance (3, 3a) is arranged offset from at least one cutter (5, 15, 25, 26, 35, 45, 55, 65, 70, 75, 80) that is a forward cutter in the direction of advance (3, 3a), perpendicular to the plane defined by the direction of impingement (4) and the direction of advance (3, 3a) and towards the workpiece (2, 12, 22).

2. A tool according to claim 1, characterised in that at least two cutters (5, 6; 15, 16; 45, 46) are arranged offset from one another in the direction of impingement (4).

3. A tool according to claim 1 or 2, characterised in that at least one forward cutter is arranged offset from at least one rearward cutter in the direction of impingement (4).

4. A tool according to any one of claims 1 to 3, characterised in that at least one of the cutters (25. 26, 30, 35, 36, 65, 66, 70) extends substantially perpendicular to the direction of impingement (4).

5. A tool according to any one of claims 1 to 4, characterised in that at least one of the cutters (5, 15. 55, 75, 80) includes with the direction of impingement (4) an acute angle, preferably an angle (7) of at least 60°.

6. A tool according to any one of claims 1 to 5, characterised in that three cutters (25, 26, 30) are provided, the cutter (26, 30) that is a respectively rearward cutter in the direction of advance (3) being arranged offset from the adjacent cutter (25, 26) that is a respectively forward cutter in the direction of advance (3), perpendicular to the plane defined by the direction of impingement (4) and the direction of advance (3) and towards the workpiece (2, 12, 22).

7. A tool according to any one of claims 1 to 6, characterised in that three cutters (65, 66, 70; 75, 76, 80) are provided, the cutter (66, 76) that is the middle cutter in the direction of advance (3, 3a) being arranged offset from the cutters (65, 70; 75, 80) adjoining it on both sides, perpendicular to the plane defined by the direction of impingement (4) and the direction of advance (3, 3a) and towards the workpiece (2, 12, 22).

8. A tool according to any one of claims 1 to 7, characterised in that three cutters (75, 76, 80) are provided, the cutter (76) that is the middle cutter in the direction of advance (3) being arranged offset in the direction of impingement (4) from the cutters (75, 80) adjoining it on both sides.

9. A tool according to any one of claims 1 to 8, characterised in that three cutters (75, 76, 80) are provided, the cutter (76) that is the middle cutter in the direction of advance (3, 3a) extending substantially perpendicular to the direction of impingement (4) and the cutters (75, 80) that adjoin the middle cutter (76) on both sides each including with the direction of impingement (4) an acute angle, preferably an angle of at least 60°.

10. A tool according to any one of claims 1 to 9, characterised in that an odd number of at least three cutters (65, 66, 70; 75, 76, 80) is provided, the cutter (66, 76) that is the middle cutter in the direction of advance (3, 3a) being arranged offset from the other cutters (65, 70; 75. 80), perpendicular to the plane defined by the direction of impingement (4) and the direction of advance (3, 3a) and towards the workpiece (2, 12, 22), and the cutters (65, 70; 75, 80) that adjoin the middle cutter (66, 76) being arranged and constructed mirror-syrnmetncally with respect to a plane of symmetry extending through the middle cutter (66, 76) in the direction of impingement (4) and perpendicular to the plane defined by the direction of impingement (4) and the direction of advance (3, 3a).

## Revendications

1. Outil pour chanfreiner des bords de pièces (2, 12, 22), de préférence de tôles (2, 12, 22), l'outil (1, 11, 21, 31, 41, 51, 61, 71) pouvant être déplacé par rapport à la pièce (2, 12, 22), dans la direction d'avancement (3, 3a), le long du bord de pièce à usiner, ainsi que, dans la direction de sollicitation (4), transversalement à la direction d'avancement (3, 3a), et présentant au moins deux tranchants (5, 6, 15, 16, 25, 26, 30, 35, 36, 45, 46, 55, 56, 65, 66, 70, 75, 76, 80) s'étendant dans la direction d'avancement (3, 3a) et disposés en juxtaposition dans cette direction, **caractérisé** en ce qu'au moins un tranchant (6, 16, 26, 30, 36, 46, 56, 66, 76) arrière dans la direction d'avancement (3, 3a) est disposé en étant décalé en direction de la pièce (2, 12, 22), par rapport à au moins un tranchant (5, 15, 25, 26, 35, 45, 55, 65, 70, 75, 80) avant dans la direction d'avancement (3, 3a), perpendiculairement au plan défini par la direction de sollicitation (4) et la direction d'avancement (3, 3a).

2. Outil selon la revendication 1, **caractérisé** en ce qu'au moins deux tranchants (5, 6 ; 15, 16 ; 45, 46) sont disposés en étant mutuellement décalés dans la direction de sollicitation (4).

3. Outil selon la revendication 1 ou 2, **caractérisé** en ce qu'au moins un tranchant avant est disposé en étant décalé dans la direction de sollicitation (4) par rapport à au moins un tranchant arrière.

4. Outil selon une des revendications 1 à 3, **caractérisé** en ce qu'au moins un des tranchants (25, 26, 30, 35, 36, 65, 66, 70) s'étend essentiellement perpendiculairement à la direction de sollicitation (4).

5. Outil selon une des revendications 1 à 4, **caractérisé** en ce qu'au moins un des tranchants (5, 15, 55, 75, 80) forme un angle aigu avec la direction de sollicitation (4), de préférence un angle (7) d'au moins 60°.

6. Outil selon une des revendications 1 à 5, **caractérisé** en ce qu'il est prévu trois tranchants (25, 26, 30), le tranchant (26, 30) respectif arrière dans la direction d'avancement (3) étant disposé en étant décalé en direction de la pièce (2, 12, 22), par rapport au tranchant (25, 26) respectif voisin avant dans la direction d'avancement (3), perpendiculairement au plan défini par la direction de sollicitation (4) et la direction d'avancement (3).

7. Outil selon une des revendications 1 à 6, **caractérisé** en ce qu'il est prévu trois tranchants (65, 66, 70 ; 75, 76, 80), le tranchant (66, 76) médian dans la direction d'avancement (3, 3a) étant disposé en étant décalé en direction de la pièce (2, 12, 22), par rapport aux tranchants (65, 70; 75, 80) voisins de part et d'autre, perpendiculairement au plan défini par la direction de sollicitation (4) et la direction d'avancement (3, 3a).

8. Outil selon une des revendications 1 à 7, **caractérisé** en ce qu'il est prévu trois tranchants (75, 76, 80), le tranchant (76) médian dans la direction d'avancement (3) étant disposé en étant décalé dans la direction de sollicitation (4) par rapport aux tranchants (75, 80) voisins de part et d'autre.

9. Outil selon une des revendications 1 à 8, **caractérisé** en ce qu'il est prévu trois tranchants (75, 76, 80), le tranchant (76) médian dans la direction d'avancement (3, 3a) s'étendant essentiellement perpendiculairement à la direction de sollicitation (4), et les tranchants (75, 80) voisins de part et d'autre du tranchant médian (76) formant respectivement un angle aigu avec la direction de sollicitation (4), de préférence un angle d'au moins 60°.

10. Outil selon une des revendications 1 à 9, **caractérisé** en ce qu'il est prévu un nombre impair d'au moins trois tranchants (65, 66, 70 ; 75, 76, 80), le tranchant (66, 76) médian dans la direction d'avancement (3, 3a) étant disposé en étant décalé en direction de la pièce (2, 12, 22), par rapport aux autres tranchants (65, 70 ; 75, 80), perpendiculairement au plan défini par la direction de sollicitation (4) et la direction d'avancement (3, 3a), et les tranchants (65, 70 ; 75, 80) voisins du tranchant médian (66, 76) étant disposés et configurés symétriquement par rapport à un plan de symétrie qui s'étend à travers le tranchant médian (66, 76) dans la direction de sollicitation (4) ainsi que perpendiculairement au plan défini par la direction de sollicitation (4) et la direction d'avancement (3, 3a).
